# EUROPEAN PATENT SPECIFICATION

(11) **EP 0 756 948 B1**
(45) Date of publication and mention of the grant of the patent: **08.08.2001**
(21) Application number: 96305459.8
(22) Date of filing: 25.07.1996
(51) Int. Cl.: B60C 9/18, B60C 9/20

(54) **Pneumatic vehicle tyre**
Fahrzeugluftreifen
Bandage pneumatique pour véhicule

(30) Priority: 31.07.1995 DE 19528008
(43) Date of publication of application: 05.02.1997
(73) Proprietor: Dunlop GmbH, 63450 Hanau (DE)
(72) Inventor: Gerresheim, Manfred, 63179 Obertshausen (DE); Lang, Werner, 63457 Hanau (DE); Lowenhaupt, Bernd, 64625 Bensheim (DE); Winter, Hans-Joachim, 63570 Gelnhausen (DE)
(74) Representative: Stewart, Charles Geoffrey

(56) References cited:
- EP-A- 0 237 599
- FR-A- 2 661 870
- GB-A- 2 096 951

## Description

The present invention relates to a pneumatic vehicle tyre comprising a carcass, a tread strip, a breaker arrangement arranged between the carcass and the tread strip and comprising at least two breaker plies which have threads or cords which serve as load-carrying members and extend at an angle to the mid-circumferential plane of the tyre, and a breaker cover which overlies the breaker arrangement at least in the region of its axial side edges and has at least one cover or bandage ply consisting of threads or cords which extend at least substantially in the circumferential direction of the tyre.

It is a general endeavour to design pneumatic vehicle tyres of the named kind so that a harmonious layout results with respect to the positioning of the individual components which can be accurately predetermined in order to achieve the best possible tyre characteristics, in particular high speed running characteristics and good tyre durability. In this respect account must be taken of the fact that as a result of the usual manufacturing processes of such tyres disturbing material shifts can results, since the tyre is built up on a mainly cylindrical building drum and is only brought into its final toroidal shape. Indeed in the final vulcanisation and moulding step, when the tyre is both heated and under pressure material shifts are a problem.

FR-A-2 661 870 discloses a radial tyre showing the features of the preamble of claim 1.

The object of the present invention is to provide a pneumatic vehicle tyre of the initially named kind which is characterised by a particularly harmonious layout and which thereby enables good tyre characteristics and long durability to be obtained.

Accordingly the object is satisfied in that the breaker cover is formed as a helically wound strip bandage, and in that at least one ply-separating cushion layer is present in each of the two axial side regions of the breaker arrangement.

By means of the cushion layers, these particularly critical regions of the tyre are specially improved and protected. They are, on the one hand, stabilised so that the danger of material shifts is minimised and, on the other hand, the load-carrying members of the plies, namely the cords or threads, are prevented from contacting one another which can lead to damage to the cords or threads and thus to deterioration of the tyre.

Such cushion layers can be provided in accordance with the invention preferably between the axial side edges of the radially outermost breaker ply and the strip bandage, between the axial side edges of radially sequential breaker plies and between the carcass and the axial side edges of the radially innermost breaker ply.

The cushion layer between the axial side edges of the radially innermost breaker ply and the carcass is preferably formed in the manner of a wedge-shaped cushion, whereby a particularly good stabilisation results in this strongly loaded tyre region. This cushion layer can also be formed by two sidewall strips each extended to be beneath the radially innermost breaker ply. In this way, the carcass is stabilised during shaping and a particularly good tyre uniformity is achieved.

The cushion layer can in each case be formed of a rubber material. This ensures a particularly good connection to the remaining components of the tyre. The characteristics of the rubber material are thereby so selected that a precise spacing of the individual ply ends results with a good ply assembly and defined relative positions. Thus, a rubber mixture with a hardness in the range of 65° to 75°, in particular 74° Shore A can preferably be used. Softer mixtures can fundamentally also be used, for example in the case of the cushion layer between the carcass and the radially innermost breaker ply when this is a part of the sidewall strip.

The thickness of the cushion layers, i.e. the mean extent in the radial direction of the tyre between the radially outermost breaker ply and the strip bandage and also between the individual breaker plies should amount to at least 0.3mm in order to ensure adequate stabilisation and security against damage. The width of these cushion layers preferably amounts to between 10 and 40mm, in particular in the range of 20mm. In this way, a particularly good tyre durability is achieved.

The thickness of the cushion layer between the carcass and the radially innermost breaker ply amounts in a breaker of a customary breaker arrangement, that is to say, in a breaker arrangement in which the axial width of the individual breaker plies reduces from the inside to the outside to preferably at least 1.0mm.

In accordance with the invention, and in a particularly advantageous manner, the axial width of the breaker plies can, however, also increase from the inside to the outside. In this case the thickness of the cushion layer between the carcass and the radially innermost breaker ply preferably amounts to at least 0.5mm.

The thickness values each relate to only the cushion layer itself. In addition, the topping rubber layer formed on and between the cords of the ply material and the strip material during calendering is in each case present and can amount to in the range of 0.1 to 0.2mm per cord ply.

One receives through this measure a particularly harmonious tyre assembly, in particular a very uniform transition from the axial edge region of the tyre to the breaker region and thereby also good tyre durability. Moreover, the material shifts during the manufacturing of the tyre, which in particular occur from the less extended axial edge region to the more extended middle tyre region, are significantly smaller than with the customer breaker ply arrangement with a breaker ply width which reduces from the inside to the outside.

In accordance with a further feature, the axial edges of the breaker plies may be curved radially towards the inside. The breaker arrangement is in particular so designed that its contour corresponds at least approximately to the outer contour of the tread strip of the tyre. In this manner, a particularly harmonious tyre build-up is achieved, and also a particularly good tyre durability.

The design of the breaker arrangement with radially inwardly curved edges can preferably be achieved by using a correspondingly shaped undertread rubber part. The radially inner boundary surface of the undertread rubber part then brings the breaker arrangement lying beneath it into the desired shape. This is advantageously simply to realise during manufacture.

In accordance with a preferred design of the invention the breaker arrangement has threads or cords of textile material, in particular of aramide.

In accordance with a further preferred embodiment threads or cords of glass or carbon fibre are present. Steel cords can however also basically be utilised.

The use of aramide cords has proved to be advantageous in conjunction with a breaker arrangement which follows the outer contour of the of the tread strip. It has also proved advantageous to use threads or cords of textile material, in particular aramide, in the strip bandage. However, threads or cords of glass or carbon fibre can also be used here.

Embodiments of the invention are shown in the drawing and will be described in the following. There are show in schematic illustration:
Figure 1 a part cross-section through a pneumatic vehicle tyre in accordance with the invention with the breaker ply width reducing from the inside to the outside;
Figure 2 a part cross-section through a pneumatic vehicle tyre in accordance with the invention with the breaker ply width increasing from the inside to the outside; and
Figure 3 a variant of Figure 2.

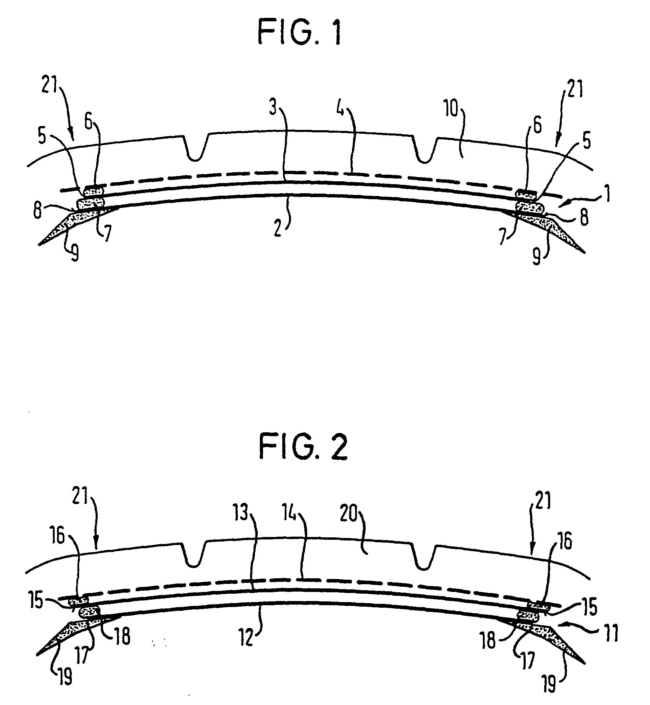

The pneumatic vehicle tyre shown in Figure 1 has a breaker arrangement 1 comprising two cut-breaker plies 2 and 3 which are surrounded by a helically wound strip bandage 4. The first radially inner breaker ply 2 has a greater axial width in this design than the second radially outer breaker ply 3.

In the region of the two axial side edges 5 of the radially outer breaker ply 3, a cushion layer 6 of rubber material is provided between the radially inner breaker ply 3 and the strip bandage 4 and has a thickness, i.e. a mean extent in the radial direction of the tyre, of at least 0.3mm. A further cushion layer 7, likewise of rubber material with a thickness of at least 0.3mm is provided in each case between the first and second breaker plies 2 and 3 in the region of their axial side edges 5 and 8. Finally, a further cushion layer 9 of rubber material which is shaped in the form of a wedge-like cushion is in each case present in the region of the two axial side edges 8 of the radially inner breaker ply 2 between the latter and the carcass which is not shown here.

The axial width of the cushion layers 6 and 7 between the first and second breaker plies 2 and 3 respectively and between the second breaker ply 3 and the strip bandage 4 is selected to be at least sufficiently large that protection of the load-carrying members of the tyres is ensured in these edge regions. The cushion layer 9 which is formed as a cushion wedge preferably has a greater width relative to the cushion layers 6 and 7. The tread strip 10 of the pneumatic vehicle tyre of the invention is indicated radially outside of the strip bandage 4.

In the variant of the pneumatic tyre illustrated in Figure 2, the breaker arrangement 11 likewise has a first radially inner breaker ply 12 and a second radially outer breaker ply 13 which are respectively formed as cut edge breakers. In this variant, the radially inner breaker ply 12 is, however, axially narrower than the radially outer breaker ply 13. Here, the breaker arrangement 11 is also surrounded by a helically wound strip bandage 14.

In the region of the two axial side edges 15 of the radially outer breaker ply 13, a cushion layer 16 of rubber material is in each case provided between the breaker ply 13 and the strip bandage 14 and has a thickness of at least 0.3mm. In just the same way a cushion layer 18 of rubber material with a thickness of at least 0.3mm is in each case present in this variant between the first and second breaker plies 12 and 13 in the region of their axial side edges 15 and 17. Finally, a cushion layer 19 of rubber material is in each case also present here in the region of two axial side edges 17 of the radially inner breaker ply 12 between the latter and a non-illustrated carcass and has the form of a wedge-like cushion. In this case, the thickness of this cushion layer is, however, at least 0.5mm. The axial width of the cushion layer 16, 18 and 19 can in each case be selected as in the variant of Figure 1. In Figure 2 the tread strip 20 of the pneumatic vehicle tyre is also only indicated.

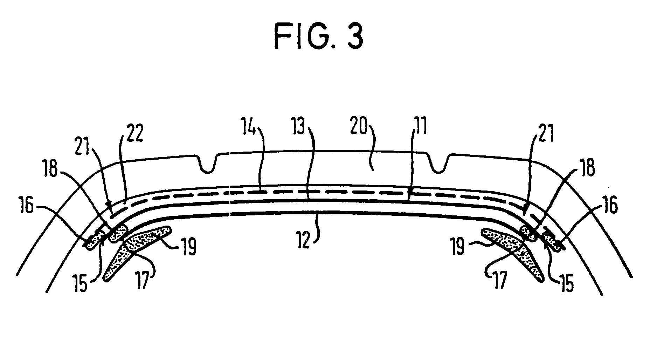

Figure 3 shows a pneumatic vehicle tyre in accordance with the invention which largely corresponds from the point of view of its layout with the variant illustrated in Figure 2. Here, a breaker arrangement 11 built up of cut-breaker plies is also present with a first, radially inner, narrower breaker ply 12 and a second, radially outer, broader breaker ply 13. A strip bandage 14 also surrounds the radially outer broader breaker ply 13. Cushion layers 16, 18 and 19 are also present, the radial thicknesses and axial widths of which can be selected in the above-named manner. In distinction to the variant of Figure 2, the breaker arrangement 11 is, however, here radially inwardly curved in its two axial side regions 21, approximately in accordance with the outer contour of the tread strip 20. The breaker arrangement 11 preferably receives its contour through a correspondingly shaped undertread rubber part 22. The assembly of the tyre is in this way very harmonious, in particular the transition from the two axial edge regions of the tyre to the breaker region.

In all variants, the strip bandage 4 or 14 can be provided, otherwise than is shown, so that it in each case only surrounds the breaker arrangement 1 or 11 respectively in partial regions of their width, and in particular in the regions of the axial side edges 5, 8, 15 and 17 of the breaker plies 2, 3, 12 and 13. The strip bandage 4 or 14 may in addition include, in addition to a winding of the individual turns so that they abut one another, also an overlapping winding and a winding with a spacing between sequential turns. Both the width of the overlap, and also the spacing, can thereby vary over the width of the tyre.

The threads or cords which serve as load-carrying members of the breaker plies 2, 3, 12 and 13, and also of the strip bandage 4 and 14, preferably consist of aramide.

## Claims

1. A pneumatic vehicle tyre comprising a carcass, a tread strip (10,20), a breaker arrangement (1,11) arranged between the carcass and the tread strip and comprising at least two breaker plies (2,3,12,13) which have threads or cords which serve as load carrying members and extend at an angle to the mid-circumferential plane of the tyre, and a breaker cover (4,14) which surrounds the breaker arrangement (1) at least in the region of its axial side edges and has at least one cover ply (4,14) consisting of threads or cords which extend substantially in the circumferential direction of the tyre, characterised in that the breaker cover (4,14) is formed as a helically wound strip bandage; and in that at least one ply-separating cushion layer (6,16) is present in each of the two axial side regions (21) of the breaker arrangement (1,11).

2. A pneumatic vehicle tyre in accordance with claim 1, characterised in that a cushion layer (6) is present between each of the two axial side edges (5) of the radially outermost breaker ply (3) and the strip bandage (4).

3. A pneumatic vehicle tyre in accordance with claim 1 or claim 2, characterised in that a further cushion layer (7) is provided between the axial side edges (5,8) of radially sequential breaker plies (2,3).

4. A pneumatic vehicle tyre in accordance with any of claims 1 to 3, characterised in that a cushion layer (9) is present between the carcass and the axial side edges (8) of the radially innermost breaker ply (2).

5. A pneumatic vehicle tyre in accordance with claim 4, characterised in that the cushion layer (9) between the carcass and the radially innermost breaker ply (2) has a wedge shape.

6. A pneumatic vehicle tyre in accordance with any of claims 1 to 5, characterised in that the cushion layer (6,7,9) consists of a rubber material.

7. A pneumatic vehicle tyre in accordance with claim 6, characterised in that the thickness of the rubber cushion (6) between the radially outermost breaker ply (3) and the strip bandage (4) amounts to at least 0.3mm at the axial side edge (5) of the radially outermost breaker ply (3).

8. A pneumatic vehicle tyre in accordance with claim 6 or claim 7, characterised in that the thickness of the rubber cushion (7) between the axial side edges (5,8) of radially sequential breaker plies (2,3) amounts to at least 0.3mm at the side edge (5) of the narrower breaker ply (3).

9. A pneumatic vehicle tyre in accordance with any of the preceding claims, characterised in that the axial width of the breaker plies (12,13) arranged radially above one another increases from the radially inner side outwardly.

10. A pneumatic vehicle tyre in accordance with claim 9, characterised in that the thickness of the rubber cushion (19) between the carcass and the radially innermost breaker ply (12) amounts to at least 0.5mm at the axial side edge (17) of the radially innermost breaker ply (12).

11. A pneumatic vehicle tyre in accordance with any of claims 1 to 8, characterised in that the axial width of breaker plies which are arranged radially above one another reduces from the radially inner side outwardly.

12. A pneumatic vehicle tyre in accordance with claim 11, characterised in that the thickness of the rubber cushion (9) between the carcass and the radially innermost breaker ply (2) amounts to at . least 1.0mm at the axial side edge (8) of the radially innermost breaker ply (2).

13. A pneumatic vehicle tyre in accordance with any of the preceding claims, characterised in that the breaker arrangement (11) is curved radially inwardly at least in its two axial side regions (21).

14. A pneumatic vehicle tyre in accordance with claim 13, characterised in that the contour of the breaker arrangement (11) corresponds at least approximately to the outer contour of the tread strip (20).

15. A pneumatic vehicle tyre in accordance with claim 13 or claim 14, characterised in that the breaker arrangement (11) receives its contour through corresponding shaping of the lower part (22) of the undertread layer.

16. A pneumatic vehicle tyre in accordance with any of the preceding claims, characterised in that the breaker arrangement (1,11) comprises reinforcement threads or cords of textile material, in particular of aramide.

17. A pneumatic vehicle tyre in accordance with any of claims 1 to 15, characterised in that the breaker arrangement (1,11) has threads or cords of glass fibre.

18. A pneumatic vehicle tyre in accordance with any . of claims 1 to 15, characterised in that the breaker arrangement (1,11) has threads or cords of carbon fibre.

19. A pneumatic vehicle tyre in accordance with any of the preceding claims, characterised in that the strip bandage (4,14) has threads or cords of textile material, in particular aramide.

20. A pneumatic vehicle tyre in accordance with any of the preceding claims, characterised in that the breaker arrangement (1) is built up of cut breaker plies (2,3).

## Patentansprüche

1. Fahrzeugluftreifen mit einer Karkasse, einem Laufflächenstreifen (10, 20), einer Breakeranordnung (1, 11), die zwischen der Karkasse und dem Laufflächenstreifen angeordnet ist und mindestens zwei Breakerlagen (2, 3, 12, 13) umfaßt, die Fäden oder Korde aufweisen, die als lasttragende Elemente dienen und sich unter einem Winkel zur Mittenumfangsebene des Reifens erstrecken, und einer Breakerabdeckung (4, 14), die die Breakeranordnung (1) mindestens im Bereich ihrer axialen Seitenkanten umgibt und mindestens eine Abdeckungslage (4, 14) aufweist, die aus Fäden oder Korden besteht, die sich im wesentlichen in der Umfangsrichtung des Reifens erstrecken, dadurch gekennzeichnet, daß die Breakerabdeckung (4, 14) als eine gewendelt gewickelte Streifenbandage ausgebildet ist; und daß mindestens eine Lagentrennungs-Kissenschicht (6, 16) in jedem der beiden axialen Seitenbereiche (21) der Breakeranordnung (1, 11) vorhanden ist.

2. Fahrzeugluftreifen nach Anspruch 1, dadurch gekennzeichnet, daß eine Kissenschicht (6) zwischen jeder der beiden axialen Seitenkanten (5) der radial äußersten Breakerlagen (3) und der Streifenbandage (4) vorhanden ist.

3. Fahrzeugluftreifen nach Anspruch 1 oder Anspruch 2, dadurch gekennzeichnet, daß eine weitere Kissenschicht (7) zwischen den axialen Seitenkanten (5, 8) von radial aufeinanderfolgenden Breakerlagen (2, 3) vorgesehen ist.

4. Fahrzeugluftreifen nach einem der Ansprüche 1 bis 3, dadurch gekennzeichnet, daß eine Kissenschicht (9) zwischen der Karkasse und den axialen Seitenkanten (8) der radial innersten Breakerlage (2) vorhanden ist.

5. Fahrzeugluftreifen nach Anspruch 4, dadurch gekennzeichnet, daß die Kissenschicht (9) zwischen der Karkasse und der radial innersten Breakerlage (2) eine Keilform aufweist.

6. Fahrzeugluftreifen nach einem der Ansprüche 1 bis 5, dadurch gekennzeichnet, daß die Kissenschicht (6, 7, 9) aus einem Gummimaterial besteht.

7. Fahrzeugluftreifen nach Anspruch 6, dadurch gekennzeichnet, daß die Dicke des Gummikissens (6) zwischen der radial äußersten Breakerlage (3) und der Streifenbandage (4) an der axialen Seitenkante (5) der radial äußersten Breakerlage (3) mindestens 0,3 mm beträgt.

8. Fahrzeugluftreifen nach Anspruch 6 oder Anspruch 7, dadurch gekennzeichnet, daß die Dicke des Gummikissens (7) zwischen den axialen Seitenkanten (5, 8) von radial aufeinanderfolgenden Breakerlagen (2, 3) an der Seitenkante (5) der schmalsten Breakerlage (3) mindestens 0,3 mm beträgt.

9. Fahrzeugluftreifen nach einem der vorhergehenden Ansprüche, dadurch gekennzeichnet, daß die axiale Breite der Breakerlagen (12, 13), die radial übereinander angeordnet sind, von der radial inneren Seite nach außen hin zunimmt.

10. Fahrzeugluftreifen nach Anspruch 9, dadurch gekennzeichnet, daß die Dicke des Gummikissens (19) zwischen der Karkasse und der radial innersten Breakerlage (12) an der axialen Seitenkante (17) der radial innersten Breakerlage (12) mindestens 0,5 mm beträgt.

11. Fahrzeugluftreifen nach einem der Ansprüche 1 bis 8, dadurch gekennzeichnet, daß die axiale Breite von Breakerlagen, die radial übereinander angeordnet sind, von der radial inneren Seite nach außen hin abnimmt.

12. Fahrzeugluftreifen nach Anspruch 11, dadurch gekennzeichnet, daß die Dicke des Gummikissens (9) zwischen der Karkasse und der radial innersten Breakerlagen (2) an der axialen Seitenkante (8) der radial innersten Breakerlage (2) mindestens 1,0 mm beträgt.

13. Fahrzeugluftreifen nach einem der vorhergehenden Ansprüche, dadurch gekennzeichnet, daß die Breakeranordnung (11) mindestens in ihren beiden axialen Seitenbereichen (21) radial nach innen gekrümmt ist.

14. Fahrzeugluftreifen nach Anspruch 13, dadurch gekennzeichnet, daß die Kontur der Breakeranordnung (11) mindestens annähernd der äußeren Kontur des Laufflächenstreifens (20) entspricht.

15. Fahrzeugluftreifen nach Anspruch 13 oder Anspruch 14, dadurch gekennzeichnet, daß die Breakeranordnung (11) ihre Kontur durch entsprechende Formgebung des unteren Teils (22) der Unterprotektorschicht erhält.

16. Fahrzeugluftreifen nach einem der vorhergehenden Ansprüche, dadurch gekennzeichnet, daß die Breakeranordnung (1, 11) Verstärkungsfäden oder -korde aus Textilmaterial, insbesondere aus Aramid, umfaßt.

17. Fahrzeugluftreifen nach einem der Ansprüche 1 bis 15, dadurch gekennzeichnet, daß die Breakeranordnung (1, 11) Fäden oder Korde aus Glasfaser aufweist.

18. Fahrzeugluftreifen nach einem der Ansprüche 1 bis 15, dadurch gekennzeichnet, daß die Breakeranordnung (1, 11) Fäden oder Korde aus Kohlefaser aufweist.

19. Fahrzeugluftreifen nach einem der vorhergehenden Ansprüche, dadurch gekennzeichnet, daß die Streifenbandage (4, 14) Fäden oder Korde aus Textilmaterial, insbesondere Aramid, aufweist.

20. Fahrzeugluftreifen nach einem der vorhergehenden Ansprüche, dadurch gekennzeichnet, daß die Breakeranordnung (1) aus geschnittenen Breakerlagen (2, 3) aufgebaut ist.

## Revendications

1. Pneumatique pour véhicule, comprenant une carcasse, un ruban (10, 20) de bande de roulement, un arrangement (1, 11) de nappe sommet placé entre la carcasse et le ruban de bande de roulement et comprenant au moins deux nappes (2, 3, 12, 13) de nappe sommet ayant des fils ou câbles utilisés comme organes d'encaissement de force et qui s'étendent en formant un angle avec le plan circonférentiel médian du pneumatique, et un organe de recouvrement (4, 14) de nappe sommet qui entoure l'arrangement (1) de nappe sommet au moins dans la région de ses bords latéraux axiaux et a au moins une nappe (4, 14) de recouvrement constituée de fils ou câbles qui s'étendent pratiquement dans la direction circonférentielle du pneumatique, caractérisé en ce que l'organe (4, 14) de recouvrement de nappe sommet est formé d'un bandage à bande enroulée en hélice, et en ce qu'une couche d'amortissement au moins (6, 16) destinée à séparer les nappes est présente dans chacune des deux régions latérales axiales (21) de l'arrangement (1, 11) de nappe sommet.

2. Pneumatique pour véhicule selon la revendication 1, caractérisé en ce qu'une couche d'amortissement (6) est présente entre chacun des deux bords latéraux axiaux (5) de la nappe radialement la plus externe (3) de nappe sommet et le ruban de bande (4).

3. Pneumatique pour véhicule selon la revendication 1 ou 2, caractérisé en ce qu'une couche supplémentaire (7) est disposée aux bords latéraux axiaux (5, 8) de nappes radialement successives (2, 3) de nappe sommet.

4. Pneumatique pour véhicule selon l'une quelconque des revendications 1 à 3, caractérisé en ce qu'une couche d'amortissement (9) est présente entre la carcasse et les bords latéraux axiaux (8) de la nappe radialement la plus externe (2) de nappe sommet.

5. Pneumatique pour véhicule selon la revendication 4, caractérisé en ce que la couche d'amortissement (9) placée entre la carcasse et la nappe radialement la plus interne (2) de nappe sommet a une forme en coin.

6. Pneumatique pour véhicule selon l'une quelconque des revendications 1 à 5, caractérisé en ce que la couche d'amortissement (6, 7, 9) est constituée d'un matériau de caoutchouc.

7. Pneumatique pour véhicule selon la revendication 6, caractérisé en ce que l'épaisseur du caoutchouc d'amortissement (6) placé entre la nappe radialement la plus externe (3) de nappe sommet et le bandage de bande (4) atteint au moins 0,3 mm au bord latéral axial (5) de la nappe radialement la plus externe (3) de nappe sommet.

8. Pneumatique pour véhicule selon la revendication 6 ou 7, caractérisé en ce que l'épaisseur du caoutchouc d'amortissement (7) placé entre les bords latéraux axiaux (5, 8) des nappes radialement successives (2, 3) de nappe sommet atteint au moins 0,3 mm au bord latéral (5) de la nappe la plus étroite (3) de la nappe sommet.

9. Pneumatique pour véhicule selon l'une quelconque des revendications précédentes, caractérisé en ce que la largeur axiale des nappes (12, 13) de la nappe sommet, disposées radialement l'une au-dessus de l'autre, augmente vers l'extérieur depuis le côté radialement interne.

10. Pneumatique pour véhicule selon la revendication 9, caractérisé en ce que l'épaisseur du caoutchouc d'amortissement (19) placé entre la carcasse et la nappe radialement la plus interne (12) de nappe sommet atteint au moins 0,5 mm au bord latéral axial (17) de la nappe radialement la plus interne (12) de nappe sommet.

11. Pneumatique pour véhicule selon l'une quelconque des revendications 1 à 8, caractérisé en ce que la largeur axiale des nappes de la nappe sommet qui sont disposées radialement l'une au-dessus de l'autre diminue vers l'extérieur depuis le côté interne radialement.

12. Pneumatique pour véhicule selon la revendication 11, caractérisé en ce que l'épaisseur du caoutchouc d'amortissement (9) placé entre la carcasse et la nappe radialement la plus interne (2) de nappe sommet atteint au moins 1,0 mm au bord latéral axial (8) de la nappe radialement la plus interne (2) de la nappe sommet

13. Pneumatique pour véhicule selon l'une quelconque des revendications précédentes, caractérisé en ce que l'arrangement (11) de nappe sommet est courbé radialement vers l'intérieur au moins dans ses deux régions latérales axiales (21).

14. Pneumatique pour véhicule selon la revendication 13, caractérisé en ce que le contour de l'arrangement (11) de nappe sommet correspond au moins approximativement au contour externe du ruban (20) de bande de roulement.

15. Pneumatique pour véhicule selon la revendication 13 ou 14, caractérisé en ce que l'arrangement (11) de nappe sommet prend son contour par mise en forme correspondante de la partie inférieure (22) de la couche placée sous la bande de roulement.

16. Pneumatique pour véhicule selon l'une quelconque des revendications précédentes, caractérisé en ce que l'arrangement (1, 11) de nappe sommet comprend des fils ou câbles d'armature d'un matériau textile, et en particulier d'aramide.

17. Pneumatique pour véhicule selon l'une quelconque des revendications 1 à 15, caractérisé en ce que l'arrangement (1, 11) de nappe sommet a des fils ou câbles de fibres de verre.

18. Pneumatique pour véhicule selon l'une quelconque des revendications 1 à 15, caractérisé en ce que l'arrangement (1, 11) de nappe sommet a des fils ou câbles de fibres de carbone.

19. Pneumatique pour véhicule selon l'une quelconque des revendications précédentes, caractérisé en ce que le bandage de bande (4, 14) a des fils ou câbles d'un matériau textile, en particulier d'aramide.

20. Pneumatique pour véhicule selon l'une quelconque des revendications précédentes, caractérisé en ce que l'arrangement de nappe sommet (1) est confectionné avec des nappes coupées (2, 3) de nappe sommet.
